# EUROPEAN PATENT SPECIFICATION

(11) **EP 4 346 444 B1**
(45) Date of publication and mention of the grant of the patent: **27.08.2025**
(21) Application number: 22731255.0
(22) Date of filing: 02.06.2022
(51) Int. Cl.: A23L 33/00

(54) **AGE SPECIFIC INFANT FORMULA AND METHOD FOR PROVIDING LACTATION STAGE SPECIFIC NUTRITION**
ALTERSSPEZIFISCHE SÄUGLINGSNAHRUNG UND VERFAHREN ZUR BEREITSTELLUNG EINER LAKTATIONSSTADIUMSPEZIFISCHEN NAHRUNG
FORMULE INFANTILE SPÉCIFIQUE À L'ÂGE ET PROCEDÉ POUR FOURNIR UNE NUTRITION SPÉCIFIQUE AU STADE DE LA LACTATION

(30) Priority: 02.06.2021 EP 21177456
(43) Date of publication of application: 10.04.2024
(73) Proprietor: N.V. Nutricia, 2712 HM Zoetermeer (NL)
(72) Inventor: MANK, Marko, 3584 CT Utrecht (NL); STAHL, Bernd, 3584 CT Utrecht (NL); GENUNEIT, Jon, 04420 Markranstädt (DE); SIZIBA, Linda Precious, 76187 Karlsruhe (DE); ROTHENBACHER, Dietrich, 89284 Pfaffenhofen-Kadeltshofen (DE); GONSALVES, John Mark Anthony, 3584 CT Utrecht (NL); BLIJENBERG, Bernadet, 3584 CT Utrecht (NL)
(74) Representative: Nederlandsch Octrooibureau
(86) International application number: PCT/EP2022/065118
(87) International publication number: WO 2022/253980

(56) References cited:
- EP-B1- 3 197 295
- WO-A1-2020/239996
- WO-A1-2021/045968
- US-B2- 10 820 616
- MA LIN ET AL: "Lactational changes in the human milk oligosaccharide concentration in Chinese and Malaysian mothers' milk", INTERNATIONAL DAIRY JOURNAL, ELSEVIER APPLIED SCIENCE, BARKING, GB, vol. 87, 29 July 2018 (2018-07-29), pages 1 - 10, XP085492383, ISSN: 0958-6946, DOI: 10.1016/J.IDAIRYJ.2018.07.015
- F. LEO ET AL: "Determination of sialyl and neutral oligosaccharide levels in transition and mature milks of Samoan women", BIOSCI. BIOTECHNOL. BIOCHEM., vol. 74, no. 2, 1 January 2010 (2010-01-01), pages 298 - 303, XP055609770
- VANDENPLAS YVAN ET AL: "A Partly Fermented Infant Formula with Postbiotics Including 3 -GL, Specific Oligosaccharides, 2 -FL, and Milk Fat Supports Adequate Growth, Is Safe and Well-Tolerated in Healthy Term Infants: A Double-Blind, Randomised, Controlled, Multi-Country Trial", NUTRIENTS, vol. 12, no. 11, 20 November 2020 (2020-11-20), pages 3560, XP055844960, DOI: 10.3390/nu12113560
- OLIVIA BALLARD ET AL: "Human Milk Composition", PEDIATRIC CLINICS OF NORTH AMERICA, vol. 60, no. 1, 1 February 2013 (2013-02-01), pages 49 - 74, XP055197368, ISSN: 0031-3955, DOI: 10.1016/j.pcl.2012.10.002
- AUSTIN SEAN ET AL: "Temporal Change of the Content of 10 Oligosaccharides in the Milk of Chinese Urban Mothers", NUTRIENTS, vol. 8, no. 6, 8 June 2016 (2016-06-08), pages 346, XP055783583, DOI: 10.3390/nu8060346

## Description

### Field of the invention

The present invention relates to nutritional compositions comprising human milk oligosaccharides, the nutritional compositions being specific for infants from 0-36 months at different lactation stages.

### Background of the invention

Human milk is regarded as the gold standard of infant nutrition due to its unique and unrivalled combination of nutritive and functional components. The World Health Organisation (WHO), and others, therefore, recommend that infants be provided human milk exclusively up to 6 months of age. When a mother is unable to breastfeed her infant, or chooses not to breastfeed, an infant formula (IF) which is developed based on the composition of mature human milk, is recognised as the best alternative to human milk. Mimicking the functional benefits of human breast milk in infant formula is the driving force in research and development of infant formulae.

Slupsky concluded that milk maturation is not stochastic (book chapter in Donovan et al. (eds.) on "Human Milk: Composition, Clinical Benefits and Future Opportunities", Nestlé Nutr Inst Workshop Ser 2019, 90:179-190). Slupsky reviewed that the human milk composition is carefully controlled by the mammary gland, which is guided by maternal genetics, and continuously changing to meet the nutrient requirements of the neonate and help guide microbial succession throughout the period of exclusive milk feeding and possibly beyond. Furthermore, microbial and fecal metabolic profiles were found to be more similar between formula-fed infants from different mothers than breastfed infants from different mothers (He et al, mSystems 2016; 1:e00128-16; O'Sullivan et al, J Proteome Res 2013; 12:2833-2845). It was speculated that this could be attributed to the differences in milk composition between mothers who are breastfeeding and driven by changes in milk composition over the lactation period, whereas in contrast the composition of the infant formula does not change.

Human milk provides several bioactive factors that benefit the relatively immature gut and immune system of neonates early in life. These components have been categorized into two different groups according to either their protective role or their ability to promote maturation. Human milk oligosaccharides (HMOs) are considered to play a part in both protection and maturation.

It is known that the influence of lactation stage differs for different nutrients. For example, total protein and lipids are believed to decrease during the first 6 months of lactation. In the quest for improved infant formula with a more optimal composition towards mimicking the beneficial effects of human milk, particularly regarding changes during lactation stage, considerable attention has been given to HMOs.

WO2016046294 describes age-tailored nutritional composition systems comprising adaptive levels of human milk oligosaccharides (HMOS). Example 1 describes an age-tailored set of nutritional compositions for infants aged 0-1 month, 1-2 months, 2-4 months and above 4 months, the composition comprising varying amounts of human milk oligosaccharides.

WO2015085549 describes an array of age-tailored infant formulae for infants from 0 to 12 months. Example 2 describes 3 infant formula compositions comprising 3'-sialyllactose, 6'sialyllactose, lacto-N-neo-tetraose (LNnT) and 2'-fucosyllactose.

WO2019008102 describes human milk fortifier compositions specifically tailored to fortify the breastmilk of multiparous woman. The human milk fortifier comprise human milk oligosaccharides and is described to be specifically tailored to supplement breastmilk produced for an infant of an age selected from the group consisting of: up to 4 months of age, and may be specifically tailored to supplement breastmilk of an infant of up to 2 weeks of age.

### Summary of the invention

The invention is based on an analysis of approximately 1300 samples of human breast milk at different lactation stages. The inventors have surprisingly found that the composition of the human milk oligosaccharides 3'-sialyllactose (3'-SL), 3-fucosyllactose (3-FL) and difucosyllactose (DFL) behave against the trend for the HMOs analysed and, in fact, significantly increase throughout the different lactation stages.

The inventors have thus identified a need to provide a modified nutritional composition which is specially adapted for feeding infants at different lactation stages. Accordingly, nutritional compositions are provided that are specially adapted for feeding infants aged 0 to 4 months, 4 to 8 months and 8 to 36 months, comprising 3'-SL and DFL at specific weight ratio of these HMOs and specific amounts of both HMOs. With the required boundaries for 3'-SL and DFL, the adapted nutrition will be closer to human breast milk, bringing the development and maturation of gut and immune systems of formula-fed infants closer to that of breastfed infants.

Accordingly, an age-specific infant formula for infants from 0 to 4 months, comprising:
a. 0.05-0.30 g/l 3'-sialyllactose (3'-SL), preferably between 0.08-0.25 g/l 3'-SL, more preferably between 0.10-0.20 g/L 3'-SL, even more preferably 0.10 - 0.18 g/l 3'-SL;
b. 0.3 to 1 g/l 3-fucosyllactose (3-FL), preferably 0.4 to 0.9 g/l 3-FL, more preferably 0.5 to 0.8 g/l 3-FL; and
c. difucosyllactose (DFL),
wherein 3'-SL and DFL are present in a weight ratio between 1:1.1 and 1:2.

The second aspect of the invention relates to an age-specific infant formula for infants from 4 to 8 months, comprising:
a. 0.05-0.30 g/l 3'-sialyllactose (3'-SL), preferably between 0.08-0.25 g/l 3'-SL, more preferably between 0.10-0.20 g/L 3'-SL, even more preferably 0.10 - 0.18 g/l 3'-SL ;
b. 1 to 3 g/l 3-fucosyllactose (3-FL), preferably 1 to 2.5 g/l 3-FL, more preferably 1.2 to 2 g/l 3-FL; and
c. difucosyllactose (DFL),
wherein 3'-SL and DFL are present in a weight ratio between 1:1.1 and 1:2.

The third aspect of the invention relates to an age-specific infant formula for infants from 8 to 36 months, preferably 8 to 24 months, more preferably 8 to 18 months, still more preferably 8 to 12 months comprising:
a. 0.2-0.5 g/l 3'syalyllactose (3'-SL), preferably between 0.2-0.35 g/l 3'-SL, more preferably between 0.2-0.3 g/L 3'-SL;
b. 1 to 3 g/l 3-fucosyllactose (3-FL), preferably 1 to 2.5 g/l 3-FL, more preferably 1.2 to 2 g/l 3-FL; and
c. difucosyllactose (DFL),
wherein 3'-SL and DFL are present in a weight ratio between 1:1.1 and 1:2.

Also described is a lactation stage specific system for infants aged 0-36 months comprising at least two age-specific infant formulae selected from:
- an age-specific infant formula for infants aged 0-4 months, as described above;
- an age-specific infant formula for infants aged 4-8 months, as described above;
- an age-specific infant formula for infants aged 8-36 months, as described above.

The invention further relates to uses and methods for providing nutrition to an infant using the nutritional compositions according to the invention, wherein the infant is between 0 and 36 months, and the method is for providing nutrition at specific lactation stages.

### Brief description of Drawings

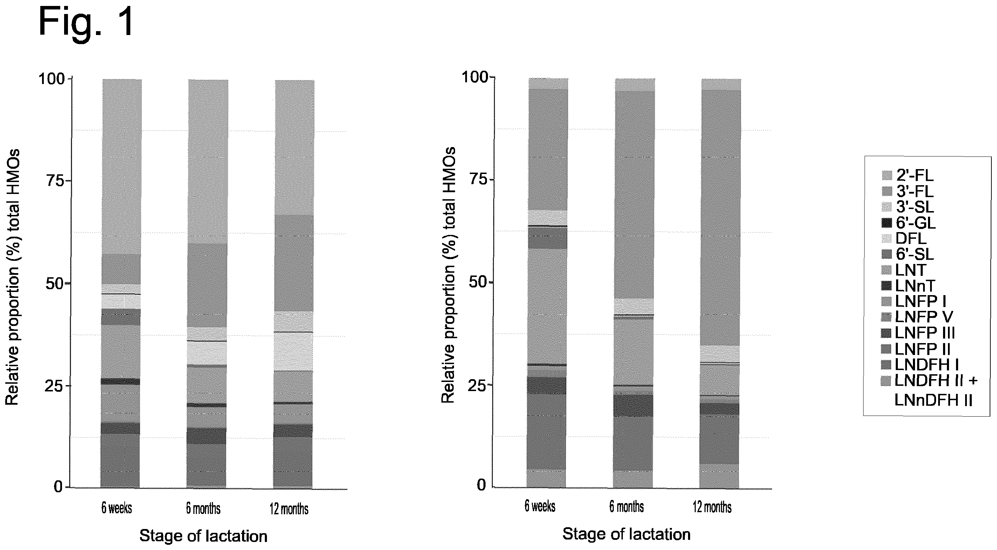

Figure 1 depicts the relative proportion (%) of human milk oligosaccharides (HMOs) in human milks samples collected at 6 weeks, 6 months and 12 months. Percentages of total HMOs were calculated for (a) secretors milks attributed to by milk types I and III; and (b) non-secretor milks attributed to by milk types II and IV.

### Detailed description of the invention

HMOs suitable for prepare the nutritional compositions according to the present invention are commercially available, for example from Jennewein Biotechnologie GmbH. Otherwise it is well within the reach of the skilled person to obtain the HMOs by isolation from suitable sources or by chemical synthesis. In a preferred embodiment, the lactation stage specific nutritional compositions can be obtained by mixing the individual HMO components, together with the other known ingredients of infant formula, to obtain the quantitative infant formula composition according to the invention.

Unless indicated otherwise, the ingredients in the infant formulae according to the invention are represented in amounts based on the final product to be consumed by the infant, i.e., reconstituted powder. Typically, from 11.5 to 14 g powder is reconstituted in 100 ml water to prepare the infant formula for consumption.

As used herein, the term "infant formula" is understood as a synthetic composition and does not comprise human milk. In the context of this application, the age indication of the "infant formulae" of the present invention is as defined throughout the present application.

For some jurisdictions, providing nutrition to an infant is considered therapeutic, other jurisdictions consider providing nutrition to an infant to be not therapeutic. Hence the invention also pertains to a non-therapeutic method for providing nutrition to an infant using the lactation specific compositions according to the invention, wherein the infant is between 0 and 36 months.

### Age specific infant formula for infants aged 0-4 months

In a first aspect, the invention relates to an age-specific infant formula for infants from 0 to 4 months, comprising:
a. 0.05-0.30 g/l 3'-sialyllactose (3'-SL), preferably between 0.08-0.25 g/l 3'-SL, more preferably between 0.10-0.20 g/L 3'-SL, even more preferably 0.10 - 0.18 g/l 3'-SL;
b. 0.3 to 1 g/l 3-fucosyllactose (3-FL), preferably 0.4 to 0.9 g/l 3-FL, more preferably 0.5 to 0.8 g/l 3-FL; and
c. difucosyllactose (DFL),
wherein 3'-SL and DFL are present in a weight ratio between 1:1.1 and 1:2.

The age-specific infant formula according to the invention is specifically designed to meet the nutritional needs of infants from 0 to 4 months so as to mimic human milk composition at the respective lactation stage as closely as possible.

The infant formula for infants aged 0-4 months is herein defined by the amounts of components in the reconstituted powder in water (g/l). The infant formula can also be defined per g/100kcal and dry basis. Accordingly, the infant formula for infants aged 0-4 months of the present invention comprises 0.05-0.30 g/l 3'-sialyllactose (3'-SL) (0.007 - 0.05 g/100kcal; 0.04 - 0.25 wt%), preferably between 0.08-0.25 g/l 3'-SL (0.01 - 0.04 g/100kcal; 0.05 - 0.2 wt%), more preferably between 0.10-0.20 g/L 3'-SL (0.015 - 0.03 g/100kcal; 0.07 - 0.15 wt%), even more preferably 0.10 - 0.18 g/l 3'-SL (0.015 - 0.027 g/100kcal; 0.07 - 0.13 wt%).

The infant formula for infants aged 0-4 months of the present invention comprises 0.3 to 1 g/l 3-fucosyllactose (3-FL) (0.03 - 0.2 g/100kcal; 0.2 - 0.8 wt%), preferably 0.4 to 0.9 g/l 3-FL (0.045 - 0.15 g/100kcal; 0.25 - 0.7 wt%), more preferably 0.5 to 0.8 g/l 3-FL (0.05 - 0.13 g/10kcal; 0.3 - 0.6 wt%).

In the infant formula of the invention, 3'-SL and DFL are present in a weight ratio between 1:1.1 and 1:2. In a preferred embodiment, the infant formula for infants 0-4 months comprises 3'-SL and DFL in a weight ratio between 1:1.2 and 1:1.8, more preferably 1:1.4 and 1:1.6.

In a preferred embodiment, the infant formula for infants aged 0-4 months comprises 0.08 to 0.40 g/l DFL (0.01 - 0.07 g/100kcal; 0.02 - 0.35 wt%), preferably 0.10 to 0.35 g/l DFL (0.015 - 0.06 g/100kcal; 0.05 - 0.3 wt%), more preferably 0.15 to 0.30 g/l DFL (0.02 - 0.055 g/100kcal; 0.1 - 0.25 wt%).

According to one embodiment, the composition further comprises 2'-FL (2-fucosyllactose). Preferably, 2'-FL is present in the infant formula for infants aged 0-4 months in a concentration between 1.0 to 4 g/l 2'-FL (0.1 - 0.7 g/100kcal; 0.5 - 3.5 wt%), more preferably from 1.5 to 3.5 g/l 2'-FL (0.15 - 0.6 g/100kcal; 1 - 3 wt%), even more preferably from 2 to 3 g/l 2'-FL (0.2 - 0.5 g/100kcal; 1.2 - 2.5 wt%).

The present infant formula preferably comprises lactose. The infant formula for infants aged 0-4 months preferably comprises 35 to 68 g/l lactose (5 - 15 g/100kcal; 20 - 55 wt%), preferably 40 to 67 g/l lactose (5.5 - 12 g/100kcal; 25 - 50 wt%), more preferably 45 to 66 g/l lactose (6 - 10 g/100kcal; 30 - 48 wt%).

In a preferred embodiment, the infant formula comprises 3'-SL, 3-FL and DFL in a weight ratio between 1:2:1.1 and 1:10:2, more preferably between 1:2:1.1 and 1:8:2, even more preferably between 1:2:1.1 and 1:7:1.5, still more preferably 1:3:1.1 to 1:6:1.3.

The infant formula may comprise at least one further human milk oligosaccharide selected from 6'-SL (6'-sialyllactose), LNT (lacto-N-tetrose), LNnT (lacto-N-neotetraose), 3GL (3'galactosyllactose), LNFP (and variants I, V, II, II) (lacto-N-fucopentaose), LNDFH (e.g. LNDFH I and/or II) (Lacto-N-difucohexaose) and LNnDFH (Lacto-N-neodifucohexaose), or mixtures thereof, preferably at least one human milk oligosaccharide selected from 6'-SL, LNT and 3GL, or mixtures thereof. Preferably, the infant formula comprises at least two of 6'-SL, LNT, LNnT, 3GL, LNFP (and variants I, V, II, II), LNDFH (e.g. LNDFH I and/or II) and LNnDFH, more preferably at least 3 of 6'-SL, LNT, LNnT, 3GL, LNFP (and variants I, V, II, II), LNDFH (e.g. LNDFH I and/or II) and LNnDFH.

The age-specific infant formula according to the invention may comprise LNnT. Preferably the present infant formula comprises 0.065-0.2 g/l LNnT, more preferably 0.07-1 g/l LNnT.

In one embodiment, the infant formula for infants aged 0-4 months comprises 6'-SL, preferably from 0.1 to 1 g/l 6'-SL, more preferably from 0.1-0.8 g/l 6'-SL, even more preferably 0.15 to 0.75 g/l 6'-SL. Expressed differently, the infant formula for infants aged 0-4 months comprise 0.01 - 0.3 g per 100 kcal 6'-SL, preferably 0.01 - 0.25 g per 100 kcal 6'-SL, more preferably 0.02 - 0.2 g per 100 kcal 6'-SL. Based on dry weight, the present infant formula preferably comprises 0.05 - 1.5 wt% 6'-SL, more preferably 0.05 - 1 wt% 6'-SL, even more preferably 0.1 - 0.5 wt% 6'-SL.

In one embodiment, the infant formula for infants aged 0-4 months comprises LNT, preferably from 0.5 to 1.5 g/l LNT (0.05 - 0.5 g/100kcal; 0.2 - 1.5 wt%) , more preferably from 0.7-1.2 g/l LNT (0.1 - 0.2 g/100kcal; 0.5 - 1 wt%).

The infant formula for the infants aged 0-4 months may comprise at least one of LNFP I, LNFP II, LNFP III, LNFP V or mixtures thereof. In one embodiment, the infant formula comprises 0.2 - 0.6 g/l LNFP I (0.01 - 0.1 g/100kcal; 0.1 - 0.5 wt%), preferably 0.3 - 0.55 g/l LNFP I (0.02 - 0.1 g/100kcal; 0.15 - 0.45 wt%) , more preferably 0.4 - 0.5 g/l LNFP I (0.05 - 0.08 g/100kcal; 0.2 - 0.4 wt%).

The infant formula for the infants aged 0-4 months may comprise LNDFH and isotopes thereof. In one embodiment, the infant formula comprises 0.1 - 0.8 g/l LNDFH I (0.01 - 0.7 g/100kcal), preferably 0.2 - 0.7 g/l LNDFH I (0.02 - 0.5 g/100kcal), more preferably 0.35 - 0.6 g/l LNDFH I (0.03 - 0.25 g/100kcal).

Preferably, the infant formula for infants aged 0-4 months comprises 1 to 10 g/l total human milk oligosaccharides (HMO) (0.1 - 3 g/100kcal), preferably 2 to 8 g/l total human milk oligosaccharides (HMO) (0.2 - 2.8 g/100kcal), more preferably 2.5 to 7 g/l total human milk oligosaccharides (HMO) (0.3 - 2.5 g/100kcal).

It is known that milk type and mother's secretor status may affect human milk oligosaccharide composition in breast milk. In one embodiment, the infant formula for the infants aged 0-4 months is specially adapted to infants from secretor mothers or non-secretor mothers.

In one embodiment, the infant formula for infants aged 0-4 months is specially adapted to infants from secretor mothers.

The infant formula for the infants aged 0-4 months specially adapted to infants from secretor mothers preferably comprises from 25 - 50% 2'-FL in relative proportion to total human milk oligosaccharides (HMO), more preferably 30-45% 2'-FL in relative proportion to total human milk oligosaccharides (HMO).

The infant formula for the infants aged 0-4 months specially adapted to infants from secretor mothers preferably comprises from 5 - 15% 3-FL in relative proportion to total human milk oligosaccharides (HMO), more preferably 5 - 10% 3-FL in relative proportion to total human milk oligosaccharides (HMO).

In another embodiment, the infant formula for the infants aged 0-4 months specially adapted to infants from secretor mothers preferably comprises from 30 - 60% of the sum of 2'-FL and 3-FL in relative proportion to total human milk oligosaccharides (HMO), more preferably 35-55% of the sum of 2'-FL and 3-FL in relative proportion to total human milk oligosaccharides (HMO).

In another embodiment, the infant formula for the infants aged 0-4 months specially adapted to infants from secretor mothers preferably comprises from 5 - 20% LNDFH I in relative proportion to total human milk oligosaccharides (HMO), more preferably 5-15% LNDFH I in relative proportion to total human milk oligosaccharides (HMO).

In another embodiment, the infant formula for the infants aged 0-4 months specially adapted to infants from secretor mothers preferably comprises from 5 - 20% LNFP I in relative proportion to total human milk oligosaccharides (HMO), more preferably 5-15% LNFP I in relative proportion to total human milk oligosaccharides (HMO).

In one embodiment, the infant formula for the infants aged 0-4 months is specially adapted to infants from non-secretor mothers.

Preferably, the infant formula for the infants aged 0-4 months specially adapted to infants from non-secretor mothers is substantially free from 2'-FL. Expressed differently, the infant formula for the infants aged 0-4 months specially adapted to infants from non-secretor mothers comprises less than 5% 2'-FL in relative proportion to total human milk oligosaccharides (HMO), more preferably less than 2% 2'-FL in relative proportion to total human milk oligosaccharides (HMO), more preferably 0% 2'-FL in relative proportion to total human milk oligosaccharides (HMO).

Preferably, the infant formula for the infants aged 0-4 months specially adapted to infants from non-secretor mothers is substantially free from DFL. Expressed differently, the infant formula for the infants aged 0-4 months specially adapted to infants from non-secretor mothers comprises less than 5% DFL in relative proportion to total human milk oligosaccharides (HMO), more preferably less than 2% DFL in relative proportion to total human milk oligosaccharides (HMO), more preferably 0% DFL in relative proportion to total human milk oligosaccharides (HMO).

In another embodiment, the infant formula for the infants aged 0-4 months specially adapted to infants from non-secretor mothers comprises 20-40% 3-FL in relative proportion to total human milk oligosaccharides (HMO), more preferably 25-35% 3-FL in relative proportion to total human milk oligosaccharides (HMO).

Preferably, the infant formula for the infants aged 0-4 months specially adapted to infants from non-secretor mothers comprises 25-70% LNT in relative proportion to total human milk oligosaccharides (HMO), more preferably 30-60% LNT in relative proportion to total human milk oligosaccharides (HMO).

In another embodiment, the infant formula for the infants aged 0-4 months specially adapted to infants from non-secretor mothers preferably comprises from 10 - 25% LNFP II in relative proportion to total human milk oligosaccharides (HMO), more preferably 10-20% LNFP II in relative proportion to total human milk oligosaccharides (HMO).

### Age specific infant formula for infants aged 4-8 months

In a second aspect, the invention relates to an age-specific infant formula for infants from 4 to 8 months, comprising:
a. 0.05-0.30 g/l 3'-sialyllactose (3'-SL), preferably between 0.08-0.25 g/l 3'-SL, more preferably between 0.10-0.20 g/L 3'-SL, even more preferably 0.10 - 0.18 g/l 3'-SL ;
b. 1 to 3 g/l 3-fucosyllactose (3-FL), preferably 1 to 2.5 g/l 3-FL, more preferably 1.2 to 2 g/l 3-FL; and
c. difucosyllactose (DFL),
wherein 3'-SL and DFL are present in a weight ratio between 1:1.1 and 1:2.

The age-specific infant formula according to the invention is specifically designed to meet the nutritional needs of infants from 4 to 8 months so as to mimic human milk composition at the respective lactation stage as closely as possible.

The infant formula for infants aged 4-8 months is herein defined by the amounts of components in the reconstituted powder in water (g/l). The infant formula can also be defined per g/100kcal and dry basis. Accordingly, the infant formula for infants aged 4-8 months of the present invention comprises 0.05-0.30 g/l 3'-sialyllactose (3'-SL) (0.005 - 0.05 g/l00kcal; 0.04 - 0.25 wt%), preferably between 0.08-0.25 g/l 3'-SL (0.01 - 0.04 g/100kcal; 0.05 - 0.2 wt%), more preferably between 0.10-0.20 g/L 3'-SL (0.015 - 0.03 g/100kcal; 0.06 - 0.15 wt%), even more preferably 0.10 - 0.18 g/l 3'-SL (0.015 - 0.027 g/100kcal; 0.07 - 0.13 wt%).

The infant formula for infants aged 4-8 months of the present invention comprises 1 to 3 g/l 3-fucosyllactose (3-FL), preferably 1 to 2.5 g/l 3-FL, more preferably 1.2 to 2 g/l 3-FL. Expressed per g/100kcal and dry matter basis, the infant formula for infants aged 4-8 months comprise 1 to 3 g/l 3-fucosyllactose (3-FL) (0.15 - 0.8 g/100kcal; 0.5 - 2 wt%), preferably 1 to 2.5 g/l 3-FL (0.15 - 0.6 g/100kcal; 0.6 - 1.75 wt%), more preferably 1.2 to 2 g/l 3-FL (0.2 - 0.5 g/100kcal; 0.8 - 1.5 wt%).

The present infant formula comprises 3'-SL and DFL in a weight ratio between 1:1.1 and 1:2. In a preferred embodiment, the infant formula for infants 4-8 months comprises 3'-SL and DFL are present in a weight ratio between 1:1.2 and 1:1.8, more preferably 1:1.4 and 1:1.6.

In a preferred embodiment, the infant formula for infants aged 4-8 months comprises 0.10 to 0.40 g/l DFL (0.015 - 0.06 - g/100kcal; 0.07 - 0.3 wt%), preferably 0.15 to 0.35 g/l DFL (0.02 - 0.055 g/100kcal; 0.10 - 0.25 wt%), more preferably 0.2 to 0.3 g/l DFL (0.03 - 0.045 g/100kcal; 0.1 - 0.2 wt%).

According to one embodiment, the composition further comprises 2'-FL (2-fucosyllactose). Preferably, 2'-FL is present in the infant formula in a concentration between 0.25 to 3 g/l 2'-FL (2-fucosyllactose) (0.035 - 0.45 g/100kcal; 0.15 - 2 wt%), more preferably from 0.5 to 2.5 g/l 2'-FL (0.07 - 0.35 g/100kcal; 0.3 - 1.75 wt%), even more preferably from 1 to 2 g/l 2'-FL (0.15 - 0.3 g/100kcal; 0.5 - 1.5 wt%).

The present infant formula preferably comprises lactose. The inventors have surprisingly found that human breast milk of mothers to infants aged around 6 months comprises a higher concentration of lactose than human milk at different lactation stages. Accordingly, the infant formula for infants aged 4-8 months preferably comprises 68 to 100 g/l lactose (5 - 25 g/100kcal; 40 - 80 wt%), preferably 70 to 90 g/l lactose (10 - 20 g/100kcal; 45 - 75 wt%), more preferably 70 to 85 g/l lactose (10 - 18 g/100kcal; 50 - 70 wt%).

In a preferred embodiment, the infant formula comprises 3'-SL, 3-FL and DFL in a weight ratio between 1:2:1.1 and 1:10:2, preferably between 1:4:1.2 and 1:8:1.8, even more preferably 1:5:1.4 to 1:8:1.6.

The infant formula may comprise at least one further human milk oligosaccharide selected from 6'-SL, LNT, LNnT, 3GL, LNFP (and variants I, V, II, II), LNDFH (e.g. LNDFH I and/or II) and LNnDFH, or mixtures thereof, preferably at least one human milk oligosaccharide selected from 6'-SL, LNT and 3GL, or mixtures thereof. Preferably, the infant formula comprises at least two of 6'-SL, LNT, LNnT, 3GL, LNFP (and variants I, V, II, II), LNDFH (e.g. LNDFH I and/or II) and LNnDFH, more preferably at least 3 of 6'-SL, LNT, LNnT, 3GL, LNFP (and variants I, V, II, II), LNDFH (e.g. LNDFH I and/or II) and LNnDFH.

The age-specific infant formula according to the invention may comprise LNnT. Preferably the present infant formula comprises 0.03-0.065 g/l LNnT, more preferably 0.04-0.06 g/l LNnT.

In one embodiment, the age-specific infant formula for infants from 4-8 months old comprises 0.001-1 g/l 6'-SL, preferably 0.01 to 0.8 g/l 6'-SL, more preferably 0.02 to 0.75 g/l 6'-SL. Expressed differently, the infant formula for infants aged 4-8 months comprise 0.0001 - 0.3 g per 100 kcal 6'-SL, preferably 0.001 - 0.25 g per 100 kcal 6'-SL, more preferably 0.003 - 0.2 g per 100 kcal 6'-SL. Based on dry weight, the present infant formula preferably comprises 0.0001 - 1.5 wt%, more preferably 0.001 - 1 wt%, even more preferably 0.01 - 0.5 wt% 6'-SL.

In one embodiment, the infant formula for infants aged 4-8 months comprises LNT, preferably from 0.1 to 1.5 g/l LNT (0.01 - 0.25 g/100kcal; 0.05 - 1.5 wt%), more preferably from 0.2-1 g/l LNT (0.02 - 0.2 g/100kcal; 0.1 - 1 wt%).

The infant formula for the infants aged 4-8 months may comprise at least one of LNFP I, LNFP II, LNFP III, LNFP V or mixtures thereof. In one embodiment, the infant formula comprises 0.05 - 0.35 g/l LNFP I (0.01 - 0.1 g/100kcal; 0.02 - 0.35 wt%), preferably 0.1 - 0.3 g/l LNFP I (0.015 - 0.08 g/100kcal; 0.05 - 0.3 wt%) , more preferably 0.15 - 0.25 g/l LNFP I (0.02 - 0.05 g/100kcal; 0.10 - 0.25 wt%).

The infant formula for the infants aged 4-8 months may comprise LNDFH and isotopes thereof. In one embodiment, the infant formula comprises 0.1 - 0.8 g/l LNDFH I (0.01 - 0.7 g/100kcal), preferably 0.15 - 0.5 g/l LNDFH I (0.02 - 0.5 g/100kcal), more preferably 0.2 - 0.4 g/l LNDFH I (0.03 - 0.25 g/100kcal).

Preferably, the infant formula for infants aged 4-8 months comprises 1 to 10 g/l total human milk oligosaccharides (HMO) (0.1 - 3 g/100kcal), preferably 2 to 8 g/l total human milk oligosaccharides (HMO) (0.2 - 2.8 g/100kcal), more preferably 2.5 to 6 g/l total human milk oligosaccharides (HMO) (0.25 - 2.5 g/100kcal).

It is known that mother's secretor status may affect human milk oligosaccharide composition in breast milk. In one embodiment, the infant formula for the infants aged 4-8 months is specially adapted to infants from secretor mothers or non-secretor mothers.

In one embodiment, the infant formula for infants aged 4-8 months is specially adapted to infants from secretor mothers.

The infant formula for the infants aged 4-8 months specially adapted to infants from secretor mothers preferably comprises from 25 - 50% 2'-FL in relative proportion to total human milk oligosaccharides (HMO), more preferably 30-45% 2'-FL in relative proportion to total human milk oligosaccharides (HMO).

The infant formula for the infants aged 4-8 months specially adapted to infants from secretor mothers preferably comprises from 10 - 30 % 3-FL in relative proportion to total human milk oligosaccharides (HMO), more preferably 10 - 25% 3-FL in relative proportion to total human milk oligosaccharides (HMO).

In another embodiment, the infant formula for the infants aged 4-8 months specially adapted to infants from secretor mothers preferably comprises from 40 - 80% of the sum of 2'-FL and 3-FL in relative proportion to total human milk oligosaccharides (HMO), more preferably 45-75% of the sum of 2'-FL and 3-FL in relative proportion to total human milk oligosaccharides (HMO).

In another embodiment, the infant formula for the infants aged 4-8 months specially adapted to infants from secretor mothers preferably comprises from 5 - 20% LNDFH I in relative proportion to total human milk oligosaccharides (HMO), more preferably 5-15% LNDFH I in relative proportion to total human milk oligosaccharides (HMO).

In another embodiment, the infant formula for the infants aged 4-8 months specially adapted to infants from secretor mothers preferably comprises from 5 - 20% LNFP I in relative proportion to total human milk oligosaccharides (HMO), more preferably 5-15% LNFP I in relative proportion to total human milk oligosaccharides (HMO).

In one embodiment, the infant formula for the infants aged 4-8 months is specially adapted to infants from non-secretor mothers.

Preferably, the infant formula for the infants aged 4-8 months specially adapted to infants from non-secretor mothers is substantially free from 2'-FL. Expressed differently, the infant formula for the infants aged 4-8 months specially adapted to infants from non-secretor mothers comprises less than 5% 2'-FL in relative proportion to total human milk oligosaccharides (HMO), more preferably less than 2% 2'-FL in relative proportion to total human milk oligosaccharides (HMO), more preferably 0% 2'-FL in relative proportion to total human milk oligosaccharides (HMO).

Preferably, the infant formula for the infants aged 4-8 months specially adapted to infants from non-secretor mothers is substantially free from DFL. Expressed differently, the infant formula for the infants aged 4-8 months specially adapted to infants from non-secretor mothers comprises less than 5% DFL in relative proportion to total human milk oligosaccharides (HMO), more preferably less than 2% DFL in relative proportion to total human milk oligosaccharides (HMO), more preferably 0% DFL in relative proportion to total human milk oligosaccharides (HMO).

In another embodiment, the infant formula for the infants aged 4-8 months specially adapted to infants from non-secretor mothers comprises 35-65% 3-FL in relative proportion to total human milk oligosaccharides (HMO), more preferably 45-60% 3-FL in relative proportion to total human milk oligosaccharides (HMO).

Preferably, the infant formula for the infants aged 4-8 months specially adapted to infants from non-secretor mothers comprises 5-20% LNT in relative proportion to total human milk oligosaccharides (HMO), more preferably 10-20% LNT in relative proportion to total human milk oligosaccharides (HMO).

In another embodiment, the infant formula for the infants aged 4-8 months specially adapted to infants from non-secretor mothers preferably comprises from 10 - 25% LNFP II in relative proportion to total human milk oligosaccharides (HMO), more preferably 10-20% LNFP II in relative proportion to total human milk oligosaccharides (HMO).

### Age specific infant formula for infants aged 8-36 months

A third aspect of the invention relates to an age-specific infant formula for infants from 8 to 36 months, preferably 8 to 24 months, more preferably 8 to 18 months, still more preferably 8 to 12 months, comprising:
a. 0.2-0.5 g/l 3'syalyllactose (3'-SL), preferably between 0.2-0.35 g/l 3'-SL, more preferably between 0.2-0.3 g/L 3'-SL;
b. 1 to 3 g/l 3-fucosyllactose (3-FL), preferably 1 to 2.5 g/l 3-FL, more preferably 1.2 to 2 g/l 3-FL; and
c. difucosyllactose (DFL),
wherein 3'-SL and DFL are present in a weight ratio between 1:1.1 and 1:2.

The age-specific infant formula according to the invention is specifically designed to meet the nutritional needs of infants from 8 to 36 months, preferably 8 to 24 months, more preferably 8 to 18 months, still more preferably 8 to 12 months so as to mimic human milk composition at the respective lactation stage as closely as possible.

The infant formula for infants aged 8-36 months is herein defined by the amounts of components in the reconstituted powder in water (g/l). The infant formula can also be defined per g/100kcal and dry basis. Accordingly, the infant formula for infants aged 8-36 months, preferably 8 to 24 months, more preferably 8 to 18 months, still more preferably 8 to 12 months, comprises 0.2-0.5 g/l 3'syalyllactose (3'-SL) (0.03 - 0.2 g/100kcal; 0.1 - 0.4 wt%), preferably between 0.2-0.35 g/l 3'-SL (0.03 - 0.15 g/100kcal; 0.1 - 0.3 wt%), more preferably between 0.2-0.3 g/L 3'-SL (0.03 - 0.1 g/10kcal; 0.1 - 0.25 wt%).

The infant formula for infants aged 8 to 36 months, preferably 8 to 24 months, more preferably 8 to 18 months, still more preferably 8 to 12 months comprise 1 to 3 g/l 3-fucosyllactose (3-FL), preferably 1 to 2.5 g/l 3-FL, more preferably 1.2 to 2 g/l 3-FL. Expressed per g/100kcal and dry matter basis, the infant formula preferably comprises 1 to 3 g/l 3-fucosyllactose (3-FL) (0.15 - 0.8 g/100kcal; 0.5 - 2 wt%), preferably 1 to 2.5 g/l 3-FL (0.15 - 0.6 g/100kcal; 0.6 - 1.75 wt%), more preferably 1.2 to 2 g/l 3-FL (0.2 - 0.5 g/100kcal; 0.8 - 1.5 wt%).

The infant formula comprises 3'-SL and DFL in a weight ratio between 1:1.1 and 1:2. In a preferred embodiment, the infant formula for infants 8-36 months, preferably 8 to 24 months, more preferably 8 to 18 months, still more preferably 8 to 12 months comprises 3'-SL and DFL in a weight ratio between 1:1.2 and 1:1.9, more preferably 1:1.3 and 1:1.7.

In a preferred embodiment, the infant formula for infants aged 8-36 months, more preferably 8 to 24 months, even more preferably 8 to 18 months, still more preferably 8 to 12 months comprises 0.2 to 1 g/l DFL (0.01 - 0.2 g/100kcal; 0.1 - 0.75 wt%), preferably 0.3 to 0.8 g/l DFL (0.03 - 0.15 g/100kcal; 0.2 - 0.55 wt%), more preferably 0.35 to 0.6 g/l DFL (0.04 - 0.1 g/100kcal; 0.22 - 0.5 wt%).

According to one embodiment, the composition further comprises 2'-FL (2-fucosyllactose). Preferably, 2'-FL is present in the infant formula in a concentration between 0.1 to 2.5 g/l 2-fucosyllactose (2'-FL) (0.01 - 0.4 g/100kcal; 0.05 - 1.8 wt%), preferably 0.5 to 2.0 g/l 2'-FL (0.05 - 0.35 g/100kcal; 0.3 - 1.5 wt%), more preferably 1 to 1.5 g/l 2'-FL (0.1 - 0.25 g/100kcal; 0.5 - 1 wt%).

The present infant formula preferably comprises lactose. The infant formula for infants aged 8-36 months, more preferably 8 to 24 months, even more preferably 8 to 18 months, still more preferably 8 to 12 months preferably comprises from 35 to 68 g/l lactose (5 - 11 g/100kcal; 20 - 50 wt%), preferably 40 to 67 g/l lactose (6 - 10.5 g/100kcal; 25 - 45 wt%), more preferably 45 to 66 g/l lactose (6.5 - 10.3 g/100kcal; 28 - 44 wt%).

In a preferred embodiment, the present infant formula comprises 3'-SL, 3-FL and DFL in a weight ratio between 1:2:1.1 and 1:10:2, preferably between 1:4:1.2 and 1:8:1.9, even more preferably 1:5:1.3 to 1:8:1.7.

The infant formula may comprise at least one further human milk oligosaccharide selected from 6'-SL, LNT, LNnT, 3GL, LNFP (and variants I, V, II, II), LNDFH (e.g. LNDFH I and/or II) and LNnDFH, or mixtures thereof, preferably at least one human milk oligosaccharide selected from 6'-SL, LNT and 3GL, or mixtures thereof. Preferably, the infant formula comprises at least two of 6'-SL, LNT, LNnT, 3GL, LNFP (and variants I, V, II, II), LNDFH (e.g. LNDFH I and/or II) and LNnDFH, more preferably at least 3 of 6'-SL, LNT, LNnT, 3GL, LNFP (and variants I, V, II, II), LNDFH (e.g. LNDFH I and/or II) and LNnDFH.

The age-specific infant formula according to the invention may comprise LNnT. Preferably the present infant formula comprises no more than 0.03 g/l LNnT.

In one embodiment, the age-specific infant formula for infants aged 8-36 months, more preferably 8 to 24 months, even more preferably 8 to 18 months, still more preferably 8 to 12 months comprises 0.001-1 g/l 6'-SL, preferably 0.01 to 0.8 g/l 6'-SL, more preferably 0.01 to 0.75 g/l 6'-SL. Expressed differently, the infant formula for infants aged 8-36 months, more preferably 8 to 24 months, even more preferably 8 to 18 months, still more preferably 8 to 12 months comprise 0.0001 - 0.3 g per 100 kcal 6'-SL, preferably 0.001 - 0.25 g per 100 kcal 6'-SL, more preferably 0.001 - 0.2 g g per 100 kcal 6'-SL. Based on dry weight, the present infant formula preferably comprises 0.0001 - 1.5 wt%, more preferably 0.001 - 1 wt%, even more preferably 0.01 - 0.5 wt% 6'-SL.

In one embodiment, the infant formula for infants 8-36 months, more preferably 8 to 24 months, even more preferably 8 to 18 months, still more preferably 8 to 12 months comprises LNT, preferably from 0.1 to 1.5 g/l LNT (0.01 - 0.25 g/100kcal; 0.05 - 1.5 wt%), more preferably from 0.2-1 g/l LNT (0.02 - 0.2 g/100kcal; 0.1 - 1 wt%).

The infant formula for the infants aged 8-36 months, preferably 8-24 months, more preferably 8-18 months, even more preferably 8-12 months may comprise at least one of LNFP I, LNFP II, LNFP III, LNFP V or mixtures thereof. In one embodiment, the infant formula comprises 0.05 - 0.30 g/l LNFP I (0.005 - 0.08 g/100kcal), preferably 0.1 - 0.25 g/l LNFP I (0.01 - 0.05 g/100kcal), more preferably 0.15 - 0.25 g/l LNFP I (0.02 - 0.05 g/100kcal).

The infant formula for the infants aged 8-36 months, preferably 8-24 months, more preferably 8-18 months, even more preferably 8-12 months may comprise LNDFH and isotopes thereof. In one embodiment, the infant formula comprises 0.1 - 0.8 g/l LNDFH I (0.01 - 0.7 g/100kcal), preferably 0.2 - 0.6 g/l LNDFH I (0.02 - 0.2 g/100 kcal), more preferably 0.25 - 0.45 g/l LNDFH I (0.035 - 0.15 g/100kcal).

Preferably, the infant formula for infants aged 8-36 months, preferably 8-24 months, more preferably 8-18 months, even more preferably 8-12 months comprises 1 to 10 g/l total human milk oligosaccharides (HMO) (0.1 - 3 g/100kcal), preferably 2 to 8 g/l total human milk oligosaccharides (HMO) (0.2 - 2.8 g/100kcal), more preferably 2.5 to 7 g/l total human milk oligosaccharides (HMO) (0.3 - 2.5 g/100kcal).

It is known that mother's secretor status may affect human milk oligosaccharide composition in breast milk. In one embodiment, the infant formula for the infants aged 8-36 months, preferably 8-24 months, more preferably 8-18 months, even more preferably 8-12 months is specially adapted to infants from secretor mothers or non-secretor mothers.

In one embodiment, the infant formula for infants aged 8-36 months, preferably 8-24 months, more preferably 8-18 months, even more preferably 8-12 months is specially adapted to infants from secretor mothers.

The infant formula for the infants aged 8-36 months, preferably 8-24 months, more preferably 8-18 months, even more preferably 8-12 months specially adapted to infants from secretor mothers preferably comprises from 20 - 40% 2'-FL in relative proportion to total human milk oligosaccharides (HMO), more preferably 25-35% 2'-FL in relative proportion to total human milk oligosaccharides (HMO).

The infant formula for the infants aged 8-36 months, preferably 8-24 months, more preferably 8-18 months, even more preferably 8-12 months specially adapted to infants from secretor mothers preferably comprises from 10 - 30 % 3-FL in relative proportion to total human milk oligosaccharides (HMO), more preferably 10 - 25% 3-FL in relative proportion to total human milk oligosaccharides (HMO).

In another embodiment, the infant formula for the infants aged 8-36 months, preferably 8-24 months, more preferably 8-18 months, even more preferably 8-12 months specially adapted to infants from secretor mothers preferably comprises from 40 - 80% of the sum of 2'-FL and 3-FL in relative proportion to total human milk oligosaccharides (HMO), more preferably 45-75% of the sum of 2'-FL and 3-FL in relative proportion to total human milk oligosaccharides (HMO).

In another embodiment, the infant formula for the infants aged 8-36 months, preferably 8-24 months, more preferably 8-18 months, even more preferably 8-12 months specially adapted to infants from secretor mothers preferably comprises from 5 - 20% LNDFH I in relative proportion to total human milk oligosaccharides (HMO), more preferably 5-15% LNDFH I in relative proportion to total human milk oligosaccharides (HMO).

In another embodiment, the infant formula for the infants aged 8-36 months, preferably 8-24 months, more preferably 8-18 months, even more preferably 8-12 months specially adapted to infants from secretor mothers preferably comprises from 5 - 20% LNFP I in relative proportion to total human milk oligosaccharides (HMO), more preferably 5-15% LNFP I in relative proportion to total human milk oligosaccharides (HMO).

In one embodiment, the infant formula for the infants aged 8-36 months, preferably 8-24 months, more preferably 8-18 months, even more preferably 8-12 months is specially adapted to infants from non-secretor mothers.

Preferably, the infant formula for the infants aged 8-36 months, preferably 8-24 months, more preferably 8-18 months, even more preferably 8-12 months specially adapted to infants from non-secretor mothers is substantially free from 2'-FL. Expressed differently, the infant formula for the infants aged 8-36 months, preferably 8-24 months, more preferably 8-18 months, even more preferably 8-12 months specially adapted to infants from non-secretor mothers comprises less than 5% 2'-FL in relative proportion to total human milk oligosaccharides (HMO), more preferably less than 2% 2'-FL in relative proportion to total human milk oligosaccharides (HMO), more preferably 0% 2'-FL in relative proportion to total human milk oligosaccharides (HMO).

Preferably, the infant formula for the infants aged 8-36 months, preferably 8-24 months, more preferably 8-18 months, even more preferably 8-12 months specially adapted to infants from non-secretor mothers is substantially free from DFL. Expressed differently, the infant formula for the infants aged 8-36 months, preferably 8-24 months, more preferably 8-18 months, even more preferably 8-12 months specially adapted to infants from non-secretor mothers comprises less than 5% DFL in relative proportion to total human milk oligosaccharides (HMO), more preferably less than 2% DFL in relative proportion to total human milk oligosaccharides (HMO), more preferably 0% DFL in relative proportion to total human milk oligosaccharides (HMO).

In another embodiment, the infant formula for the infants aged 8-36 months, preferably 8-24 months, more preferably 8-18 months, even more preferably 8-12 months specially adapted to infants from non-secretor mothers comprises 50-85% 3-FL in relative proportion to total human milk oligosaccharides (HMO), more preferably 55-75% 3-FL in relative proportion to total human milk oligosaccharides (HMO).

Preferably, the infant formula for the infants aged 8-36 months, preferably 8-24 months, more preferably 8-18 months, even more preferably 8-12 months specially adapted to infants from non-secretor mothers comprises 5-15% LNT in relative proportion to total human milk oligosaccharides (HMO), more preferably 5-10% LNT in relative proportion to total human milk oligosaccharides (HMO).

In another embodiment, the infant formula for the infants aged 8-36 months, preferably 8-24 months, more preferably 8-18 months, even more preferably 8-12 months specially adapted to infants from non-secretor mothers preferably comprises from 10 - 25% LNFP II in relative proportion to total human milk oligosaccharides (HMO), more preferably 10-20% LNFP II in relative proportion to total human milk oligosaccharides (HMO).

### Additional components to the age-specific infant formula for infants aged 0-36 months

The age-specific infant formulae according to the invention, i.e. the infant formula for infants aged 0-4 months, 4-8 months and 8-36 months, additionally comprises lipids, proteins and digestible carbohydrates, and additional human milk oligosaccharides.

Typically, the infant formulae according to the invention comprise 1 to 10 g/l total human milk oligosaccharides (HMO). The age-specific infant formulae according to the invention may comprise at least one further human milk oligosaccharide selected from 6'-SL, LNT, LNnT, 3GL, LNFP (and variants I, V, II, II), LNDFH and variants thereof (e.g. LNDFH I and/or II) and LNnDFH, or mixtures thereof, preferably at least one human milk oligosaccharide selected from 6'-SL, LNT and 3GL, or mixtures thereof. Preferably, the age-specific infant formulae according to the invention comprise at least two human milk oligosaccharide selected from 6'-SL, LNT, LNnT, 3GL. More preferably the age-specific infant formulae according to the invention do not comprise LNT.

The age-specific infant formulae according to the invention preferably comprises 3GL. Typically, the infant formulae according to the invention comprises 0.05 to 0.3 g/l 3GL, preferably 0.08 to 0.25 g/l 3GL, more preferably 0.1 to 0.2 g/l 3GL. Expressed differently, the infant formulae according to the invention comprises 0.07 to 0.45 g per 100 kcal 3GL, preferably 0.12 to 0.37 g per 100 kcal 3GL, more preferably 0.15 to 0.3 g per 100 kcal 3GL. Based on dry weight, the present infant formula preferably comprises 0.035 to 0.22 wt% 3GL, more preferably 0.06 to 0.18 wt% 3GL, even more preferably 0.07 to 0.14 wt% 3GL.

The compositions according to the invention preferably comprises a digestible carbohydrate component. Preferred digestible carbohydrate components are lactose, glucose, sucrose, fructose, galactose, maltose, starch and maltodextrin. Lactose is the main digestible carbohydrate present in human milk. The present infant formula preferably comprises lactose. Preferably the present infant formula does not comprise high amounts of carbohydrates other than lactose. Compared to digestible carbohydrates such as maltodextrin, sucrose, glucose, maltose and other digestible carbohydrates with a high glycemic index, lactose has a lower glycemic index and is therefore preferred.

The infant formulae for infants aged 0-36 months according to the invention preferably comprise lipids providing 3 to 7 g lipid per 100 kcal, preferably 4 to 6 g per 100 kcal, the protein provides 1.6 to 4 g per 100 kcal, preferably 1.8 to 3 g per 100 kcal and the digestible carbohydrate provides 5 to 20 g per 100 kcal, preferably 8 to 15 g per 100 kcal of the nutritional composition, and wherein preferably the digestible carbohydrate component comprises at least 60 wt% lactose based on total digestible carbohydrate, more preferably at least 75 wt%, even more preferably at least 90 wt% lactose based on total digestible carbohydrate.

The amount of total calories is determined by the sum of calories derived from protein, lipids, digestible carbohydrates and non-digestible oligosaccharide. Preferably, the lipid provides 5 to 50% of the total calories, the protein provides 5 to 50% of the total calories, and the digestible carbohydrate provides 15 to 90% of the total calories. For calculation of the % of total calories for the protein, the total of energy provided by proteins, peptides and amino acids needs to be taken into account.

**The** present infant formulae of the invention preferably comprise at least one lipid selected from the group consisting of animal lipid (excluding human lipids) and vegetable lipids. Preferably the present infant formula comprises a combination of vegetable lipids and at least one oil selected from the group consisting of fish oil, animal oil, algae oil, fungal oil, and bacterial oil. The lipid of the present infant formula preferably provides 3 to 7 g per 100 kcal of the nutritional composition, preferably the lipid provides 4 to 6 g per 100 kcal. When in liquid form, e.g. as a ready-to-feed liquid, the infant formula preferably comprises 2.1 to 6.5 g lipid per 100 ml, more preferably 3.0 to 4.0 g per 100 ml. Based on dry weight the present infant formula preferably comprises 12.5 to 40 wt% lipid, more preferably 19 to 30 wt%. Preferably the lipid comprises the essential fatty acids alpha-linolenic acid (ALA), linoleic acid (LA) and/or long chain polyunsaturated fatty acids (LC-PUFA). The LC-PUFA, LA and/or ALA may be provided as free fatty acids, in triglyceride form, in diglyceride form, in monoglyceride form, in phospholipid form, or as a mixture of one of more of the above. Preferably the present infant formula comprises at least one, preferably at least two lipid sources selected from the group consisting of rape seed oil (such as colza oil, low erucic acid rape seed oil and canola oil), high oleic sunflower oil, high oleic safflower oil, olive oil, marine oils, microbial oils, coconut oil, palm kernel oil. The present infant formula is not human milk.

**The** present infant formula preferably comprises protein. The protein used in the infant formula is preferably selected from the group consisting of non-human animal proteins, preferably milk proteins, vegetable proteins, such as preferably soy protein and/or rice protein, and mixtures thereof. The present infant formula preferably contains casein and/or whey protein, more preferably bovine whey proteins and/or bovine casein. Thus in one embodiment the protein in the present infant formula comprises protein selected from the group consisting of whey protein and casein, preferably whey protein and casein, preferably the whey protein and/or casein is from cow's milk. Preferably the protein comprises less than 5 wt% based on total protein of free amino acids, dipeptides, tripeptides or hydrolyzed protein. The present infant formula preferably comprises casein and whey proteins in a weight ratio casein : whey protein of 10 : 90 to 90 : 10, more preferably 20 : 80 to 80 : 20, even more preferably 35 : 65 to 55 : 45.

In order to meet the caloric requirements of an infant or toddler, the infant formula preferably comprises 45 to 200 kcal/100 ml liquid. Preferably the infant formula has 55 to 80 kcal/100 ml liquid, even more preferably 60 to 70 kcal/100 ml liquid. This caloric density ensures an optimal ratio between water and calorie consumption. The osmolarity of the present infant formula is preferably between 150 and 420 mOsmol/l, more preferably 260 to 320 mOsmol/l. The low osmolarity aims to further reduce the gastrointestinal stress.

When the infant formula is in a ready to feed, liquid form, the preferred volume administered on a daily basis is in the range of about 80 to 2500 ml, more preferably about 200 to 1200 ml per day. Preferably, the number of feedings per day is between 1 and 10, preferably between 3 and 8. In one embodiment the infant formula is administered daily for a period of at least 2 days, preferably for a period of at least 4 weeks, preferably for a period of at least 8 weeks, more preferably for a period of at 25 least 12 weeks, in a liquid form wherein the total volume administered daily is between 200 ml and 1200 ml and wherein the number of feedings per day is between 1 and 10.

**The** present infant formula may be in liquid form. The present infant formula may also be in the form of a dry food, preferably in the form of a powder which is accompanied with instructions as to mix said dry food, preferably powder, with a suitable liquid, preferably water. The infant formula used according to the invention preferably comprises other fractions, such as vitamins, minerals, trace elements and other micronutrients in order to make it a complete nutritional composition. Preferably infant formulas comprise vitamins, minerals, trace elements and other micronutrients according to international directives.

**The** present infant formula preferably comprises 2.5 to 20 wt% total non-digestible oligosaccharide, more preferably 2.5 to 15 wt%, even more preferably 3.0 to 10 wt%, most preferably 5.0 to 7.5 wt%, based on dry weight of the nutritional composition. Based on 100 ml the present infant formula preferably comprises 0.35 to 2.5 wt% total non-digestible oligosaccharide, more preferably 0.35 to 2.0 wt%, even more preferably 0.4 to 1.5 wt%, based on 100 ml of the nutritional composition. A lower amount of non-digestible oligosaccharide will be less effective in improving the intestinal microbiota-function, whereas a too high amount will result in side-effects of bloating and abdominal discomfort.

Preferably, the present infant formula further comprises fructo-oligosaccharides (FOS). Fructo-oligosaccharides are a non-digestible oligosaccharides (NDO) comprising a chain of beta-linked fructose units with a degree of polymerization (DP) or average DP of 2 to 250, more preferably 2 to 100, even more preferably 10 to 60. Fructo-oligosaccharide includes inulin, levan and/or a mixed type of polyfructan. An especially preferred fructo-oligosaccharide is inulin. Fructo-oligosaccharide suitable for use in the compositions is also commercially available, e.g. Raftiline^{®}HP (Orafti). Preferably the fructo-oligosaccharide has an average DP above 20.

Preferably, the present infant formula further comprises galacto-oligosaccharides (GOS), preferably the galacto-oligosaccharides comprise beta-galactooligosaccharides and/or alpha galactooligosaccharides. The galacto-oligosaccharides preferably are beta-galacto-oligosaccharides. In a particularly preferred embodiment the present infant formula comprises beta-galacto-oligosaccharides ([galactose]n-glucose; wherein n is an integer ranging from 2 to 60, i.e. 2, 3, 4, 5, 6, ...., 59 ,60; preferably n is selected from 2, 3, 4, 5, 6, 7, 8, 9, and 10), wherein the galactose units are in majority linked together via a beta linkage. Beta-galacto-oligosaccharides are also referred to as trans-galacto-oligosaccharides (TOS). Beta-galacto-oligosaccharides are for example sold under the trademark Vivinal(TM) (Borculo Domo Ingredients, Netherlands). Another suitable source is Bi2Munno (Classado). Preferably the galacto-oligosaccharides comprise beta-1,3, beta-1,4 and/or beta-1,6 linkages. In a preferred embodiment, galacto-oligosaccharides comprise at least 80 % beta-1,4 and beta-1,6 linkages based on total linkages, more preferably at least 90 %. In another preferred embodiment, the galacto-oligosaccharides comprise at least 50 % beta-1,3 linkages based on total linkages, more preferably at least 60 % based on total linkages.

Galacto-oligosaccharides, preferably beta-galacto-oligosaccharides, are more capable of stimulating bifidobacteria. Preferably the present infant formula comprises galacto-oligosaccharides, preferably beta-galacto-oligosaccharides, with a degree of polymerization (DP) of 2 to 10, preferably with an average DP in the range of 3 to 7.

In a further embodiment, the present infant formula comprises fructo-oligosaccharides and galacto-oligosaccharides (GOS), preferably the galacto-oligosaccharides comprise beta-galacto-oligosaccharides. More preferably the fructo-oligosaccharides are long chain fructo-oligosaccharides (IcFOS) with an average DP above 20. More preferably the galacto-oligosaccharides are short chain galacto-oligosaccharides (scGOS) with an average DP in the range of 3 to 7. The weight ratio of short chain galacto-oligosaccharides and long chain fructo-oligosaccharides ranges from 100:1 to 1:10, preferably from 20:1 to 1:1, preferably is about 9:1.

In a further embodiment, the present age-specific infant formulae comprises 2 to 10 g/l fructo-oligosaccharides with an average degree of polymerisation above 20 and/or galacto-oligosaccharides with an average degree of polymerisation in the range from 3 to 7, preferably 4 to 8 g/l fructo-oligosaccharides with an average degree of polymerisation above 20 and/or galacto-oligosaccharides with an average degree of polymerisation in the range from 3 to 7, more preferably 5 to 7 g/l fructo-oligosaccharides with an average degree of polymerisation above 20 and/or galacto-oligosaccharides with an average degree of polymerisation in the range from 3 to 7.

Preferably, the age-specific infant formulae according to the invention comprise GOS and FOS in an amount ranging from 0.3 - 3 g/100 kcal, more preferably 0.5 - 2 g/100 kcal, even more preferably 0.8-1.5 g/kcal. When reconstituted in water, the age-specific infant formulae according to the invention comprise GOS and FOS in an amount ranging from 0.1 - 1.5 g/100 ml, more preferably 0.2 - 1 g/100 ml, even more preferably 0.3-0.9 g/100 ml.

The invention further relates to a method for providing lactation stage specific nutrition to an infant, using the age-specific infant formulae of the invention. Preferably, the method comprises at least one step selected from: providing an infant aged 0-4 months with an infant formula according to the invention; providing an infant aged 4-8 months with an infant formula according to the invention; and/or providing an infant aged 8-36 months with an infant formula according to the invention.

### Lactation stage specific system for infants aged 0-36 months

Another example relates to a lactation stage specific system for infants aged 0-12 months comprising at least two age-specific infant formulae selected from:
- an age-specific infant formula for infants aged 0-4 months;
- an age-specific infant formula for infants aged 4-8 months;
- an age-specific infant formula for infants aged 8-36 months, preferably 8 to 24 months, more preferably 8 to 18 months, still more preferably 8 to 12 months.

Preferably, the exemplary lactation stage specific system comprises at least the age-specific infant formula for infants aged 0-4 months and the age-specific infant formula for infants aged 4-8 months. Alternatively, the lactation stage specific system of the invention preferably comprises at least the age-specific infant formula for infants aged 4-8 months and the age-specific infant formula for infants aged 8-36 months, preferably 8 to 24 months, more preferably 8 to 18 months, still more preferably 8 to 12 months.

### EXAMPLES

### Example 1

Analysis of > 1200 human milk samples from German mothers from the Ulm SPATZ HM cohort with advanced analytical methods (MRM-LC-MS) was conducted. Table A shows the characteristics of lactating mothers whose human milk samples were available for the present HMO analysis:

**Table A**

| | | All 6 weeks | | All 6 months | | All 12 months | |
|---|---|---|---|---|---|---|---|
| Characteristics | | samples (*n =* 682) | | samples (*n =* 448) | | samples (*n* = 73) | |
| Mother | | n | % or mea | n | % or mea | n | % or mea |
| | Age | 681 | 33.1 | 447 | 33.5 | 72 | 34.3 |
| | Maternal body weight (6 weeks) [kg] | 587 | 70.5 | 385 | 69.9 | 58 | 70.8 |
| | Maternal BMI (6 weeks) [kg] | 662 | 24.7 | 438 | 24.8 | 72 | 25.1 |
| Milk type | | | | | | | |
| | I | 502 | 74 | 330 | 74 | 55 | 75 |
| | II | 122 | 18 | 80 | 18 | 13 | 18 |
| | III | 49 | 7 | 32 | 7 | 5 | 7 |
| | IV | 9 | 1 | 6 | 1 | 0 | 0 |

| **Infant** | | | | | | | |
|---|---|---|---|---|---|---|---|
| | Female | 339 | 50 | 216 | 48 | 29 | 40 |
| | Male | 343 | 50 | 232 | 52 | 44 | 60 |
| | Gestation weeks | 682 | 38.7 | 448 | 38.8 | 73 | 38.6 |
| | Birth weight [g] | 682 | 3272 | 448 | 3282 | 73 | 3292 |
| Delivery mode | | | | | | | |
| | Vaginal spontaneous | 432 | 63 | 294 | 65 | 48 | 66 |
| | Elective caesarean | 80 | 12 | 52 | 11 | 8 | 11 |
| | Emergency caesarean | 118 | 17 | 66 | 14 | 13 | 18 |
| | Vaginal assisted | 52 | 8 | 36 | 8 | 4 | 5 |

**The** analytical approach was applied as described in the following to publications: 1) Mank M, Welsch P, Heck AJR, Stahl B. Label-free targeted LC-ESI-MS(2) analysis of human milk oligosaccharides (HMOS) and related human milk groups with enhanced structural selectivity. Anal Bioanal Chem. 2019;411(1):231-50, and 2) Mank M, Hauner H, Heck AJR, Stahl B. Targeted LC-ESI-MS2 characterization of human milk oligosaccharide diversity at 6 to 16 weeks post-partum reveals clear staging effects and distinctive milk groups. Anal Bioanal Chem. 2020.

Absolute quantitation of HMOs and lactose was achieved by translating mass spectrometric area under the curve values (AUC) obtained for individual HMOs into absolute HMOs concentrations by means of external calibration functions. The latter were generated by using isotopically pure standards for each HMO structure to be quantified. The method was thoroughly validated by determination of e.g. upper and lower limits of quantitation (ULOQ and LLOQ). Appropriate statistical evaluation of the yielded data was used to determine e.g. significant differences in HMOs levels between the different stages of lactation.

Table I shows the absolute concentrations of human milk oligosaccharides (HMOs) measured in human milk samples collected at 6 weeks, 6 months and 12 months post-partum. Amounts provided in g/l for analyzed mean.

**Table I**

| HMO | 6 weeks (n=66) | 6 months (n=66) | 12 months (n=66) |
|---|---|---|---|
| 3'-SL | 0.12 | 0.14 | 0.25 |
| 3-FL | 0.64 | 1.24 | 1.52 |
| DFL | 0.18 | 0.20 | 0.40 |
| 2'-FL | 2.45 | 1.65 | 1.43 |
| 6'-SL | 0.24 | 0.04 | 0.01 |
| LNT | 0.86 | 0.44 | 0.36 |
| LNFP I | 0.43 | 0.19 | 0.20 |
| LNDFH I | 0.5 | 0.27 | 0.36 |
| Total HMOs | 6.09 | 4.74 | 5.03 |

Same analytical approach as described above was applied to determine lactose in human breast milk samples collected in this study. The results are presented in table II.

**Table II**

| | **6 weeks (n=422)** | **6 months (n=422)** | **12 months (n=58)** |
|---|---|---|---|
| **Lactose (g/l)** | **66.7** | **70.5** | **64.3** |

### Example 2

Infant formulae designed for infants aged 0-36 months are prepared using conventional infant formula manufacturing processes. Lactation stage specific amounts of HMOs are added to the infant formulae. Table III describes an lactation stage specific infant formulae according to the invention:

**Table III**

| **Ingredients (unit)** | **Age-specific infant formula for infants aged 0-4 months** | **Age-specific infant formula for infants aged 4-8 months** | **Age-specific infant formula for infants aged 8-36 months** |
|---|---|---|---|
| Energy content (kcal/100ml) | 66 | 66 | 66 |
| Proteins (g/100ml) | 1.3 | 1.3 | 1.3 |
| Fat (g/100ml) | 3.4 | 3.4 | 3.4 |
| Carbohydrates (g/100ml) | 7.3 | 7.3 | 7.3 |
| Lactose (g/100 ml) | 6.6 | 7 | 6.4 |
| GOS+FOS (g/100 ml) | 0.7 | 0.7 | 0.7 |
| Total nucleotides (mg/100ml) | 2.3 | 2.3 | 2.3 |
| 3'-SL (mg/100ml) | 10 | 10 | 30 |
| 3-FL (mg/100ml) | 60 | 120 | 150 |
| DFL (mg/100ml) | 18 | 20 | 40 |
| 2'-FL (mg/100ml) | 250 | 170 | 140 |

## Claims

1. An age-specific infant formula for infants from 0 to 4 months, comprising:
a. 0.05-0.30 g/l 3'-sialyllactose (3'-SL), preferably between 0.08-0.25 g/l 3'-SL, more preferably between 0.10-0.20 g/L 3'-SL, even more preferably 0.10 - 0.18 g/l 3'-SL;
b. 0.3 to 1 g/l 3-fucosyllactose (3-FL), preferably 0.4 to 0.9 g/l 3-FL, more preferably 0.5 to 0.8 g/l 3-FL; and
c. difucosyllactose (DFL),
wherein 3'-SL and DFL are present in a weight ratio between 1:1.1 and 1:2.

2. The age-specific infant formula according to claim 1, comprising 0.08 to 0.40 g/l DFL, preferably 0.10 to 0.35 g/l DFL, more preferably 0.15 to 0.30 g/l DFL.

3. The age-specific infant formula according to claim 1 or 2, wherein the composition further comprises 2'-FL (2-fucosyllactose), the composition preferably comprising 1.0 to 4 g/l 2'-FL, and/or the composition further comprises 35 to 68 g/l lactose, preferably 40 to 67 g/l lactose, more preferably 45 to 66 g/l lactose.

4. An age-specific infant formula for infants from 4 to 8 months, comprising:
a. 0.05-0.30 g/l 3'-sialyllactose (3'-SL), preferably between 0.08-0.25 g/l 3'-SL, more preferably between 0.10-0.20 g/L 3'-SL, even more preferably 0.10 - 0.18 g/l 3'-SL ;
b. 1 to 3 g/l 3-fucosyllactose (3-FL), preferably 1 to 2.5 g/l 3-FL, more preferably 1.2 to 2 g/l 3-FL; and
c. difucosyllactose (DFL),
wherein 3'-SL and DFL are present in a weight ratio between 1:1.1 and 1:2.

5. The age-specific infant formula according to claim 4, comprising 0.10 to 0.40 g/l DFL, preferably 0.15 to 0.35 g/l DFL, more preferably 0.2 to 0.3 g/l DFL.

6. The age-specific infant formula according to claim 4 or 5, wherein the composition further comprises 2'-FL (2-fucosyllactose), the composition preferably comprising 0.25 to 3 g/l 2'-FL, and/or the composition further comprises 68 to 100 g/l lactose, preferably 70 to 90 g/l lactose, more preferably 70 to 85 g/l lactose.

7. An age-specific infant formula for infants from 8 to 36 months, comprising:
a. 0.2-0.5 g/l 3'syalyllactose (3'-SL), preferably between 0.2-0.35 g/l 3'-SL, more preferably between 0.2-0.3 g/L 3'-SL;
b. 1 to 3 g/l 3-fucosyllactose (3-FL), preferably 1 to 2.5 g/l 3-FL, more preferably 1.2 to 2 g/l 3-FL; and
c. difucosyllactose (DFL),
wherein 3'-SL and DFL are present in a weight ratio between 1:1.1 and 1:2.

8. The age-specific infant formula according to claim 7, comprising 0.2 to 1 g/l DFL, preferably 0.3 to 0.8 g/l DFL, more preferably 0.35 to 0.6 g/l DFL.

9. The age-specific infant formula any one of claims 7-8, wherein the composition further comprises 2'-FL (2-fucosyllactose), the composition preferably comprising 0.1 to 2.5 g/l 2-fucosyllactose (2'-FL),
and/or the composition further comprises from 35 to 68 g/l lactose, preferably 40 to 67 g/l lactose, more preferably 45 to 66 g/l lactose.

10. The age-specific infant formula according to any one of the preceding claims, comprising at least one further human milk oligosaccharide selected from 6'-sialyllactose (6'-SL), lacto-N-tetrose (LNT), lacto-N-neotetraose (LNnT), 3'-galactosyllactose (3GL), lacto-N-fucopentaose (LNFP) and isotopes thereof, Lacto-N-difucohexaose (LNDFH) and isotopes thereof, Lacto-N-neodifucohexaose (LNnDFH) and isotopes thereof, or mixtures thereof, preferably at least one human milk oligosaccharide selected from 6'-SL, LNT and 3GL, or mixtures thereof.

11. The age-specific infant formula according to any one of the preceding claims, the composition comprising 0.05 to 0.3 g/l 3GL, preferably 0.08 to 0.25 g/l 3GL, more preferably 0.1 to 0.2 g/l 3GL.

12. The age-specific infant formula according to any one of the preceding claims, the composition comprising 1 to 10 g/l total human milk oligosaccharides (HMO).

13. The infant formula according to any one of the previous claims, further comprising fructo-oligosaccharides with an average degree of polymerisation above 20 and/or galacto-oligosaccharides with an average degree of polymerisation in the range from 3 to 7, preferably in a weight ratio of fructo-oligosaccharides to galacto-oligosaccharides in the range of 10 : 1 to 1 : 100.

14. A method for providing lactation stage specific nutrition to an infant, using the age-specific infant formulae as defined in any of claims 1-13, wherein the method preferably comprises at least one step selected from:
- providing an infant aged 0-4 months with an infant formula according to claims 1-3 and 10-13;
- providing an infant aged 4-8 months with an infant formula according to claims 4-6 and 10-13;
- providing an infant aged 8-36 months with an infant formula according to claims 7-13.

## Patentansprüche

1. Altersspezifische Säuglingsnahrung für Säuglinge von 0 bis 4 Monaten, die Folgendes umfasst:
a. 0,05-0,30 g/l 3'-Sialyllactose (3'-SL), vorzugsweise zwischen 0,08-0,25 g/l 3'-SL, besonders bevorzugt zwischen 0,10-0,20 g/L 3'-SL, noch bevorzugter 0,10 - 0,18 g/l 3'-SL;
b. 0,3 bis 1 g/l 3-Fucosyllactose (3-FL), vorzugsweise 0,4 bis 0,9 g/l 3-FL, besonders bevorzugt 0,5 bis 0,8 g/l 3-FL; und
c. Difucosyllactose (DFL),
wobei 3'-SL und DFL in einem Gewichtsverhältnis zwischen 1:1,1 und 1:2 vorliegen.

2. Altersspezifische Säuglingsnahrung nach Anspruch 1, die 0,08 bis 0,40 g/l DFL, vorzugsweise 0,10 bis 0,35 g/l DFL, besonders bevorzugt 0,15 bis 0,30 g/l DFL umfasst.

3. Altersspezifische Säuglingsnahrung nach Anspruch 1 oder 2, wobei die Zusammensetzung ferner 2'-FL (2-Fucosyllactose) umfasst, wobei die Zusammensetzung vorzugsweise 1,0 bis 4 g/l 2'-FL umfasst und/oder wobei die Zusammensetzung ferner 35 bis 68 g/l Laktose, vorzugsweise 40 bis 67 g/l Laktose, besonders bevorzugt 45 bis 66 g/l Laktose umfasst.

4. Altersspezifische Säuglingsnahrung für Säuglinge im Alter von 4 bis 8 Monaten, die Folgendes umfasst:
a. 0,05-0,30 g/l 3'-Sialyllactose (3'-SL), vorzugsweise zwischen 0,08-0,25 g/l 3'-SL, besonders bevorzugt zwischen 0,10-0,20 g/L 3'-SL, noch bevorzugter 0,10 - 0,18 g/l 3'-SL;
b. 1 bis 3 g/l 3-Fucosyllactose (3-FL), vorzugsweise 1 bis 2,5 g/l 3-FL, besonders bevorzugt 1,2 bis 2 g/l 3-FL; und
c. Difucosyllactose (DFL),
wobei 3'-SL und DFL in einem Gewichtsverhältnis zwischen 1:1,1 und 1:2 vorliegen.

5. Altersspezifische Säuglingsnahrung nach Anspruch 4, die 0,10 bis 0,40 g/l DFL, vorzugsweise 0,15 bis 0,35 g/l DFL, besonders bevorzugt 0,2 bis 0,3 g/l DFL umfasst.

6. Altersspezifische Säuglingsnahrung nach Anspruch 4 oder 5, wobei die Zusammensetzung ferner 2'-FL (2-Fucosyllactose) umfasst, wobei die Zusammensetzung vorzugsweise 0,25 bis 3 g/l 2'-FL umfasst und/oder wobei die Zusammensetzung ferner 68 bis 100 g/l Laktose, vorzugsweise 70 bis 90 g/l Laktose, besonders bevorzugt 70 bis 85 g/l Laktose umfasst.

7. Altersspezifische Säuglingsnahrung für Säuglinge im Alter von 8 bis 36 Monaten, die Folgendes umfasst:
a. 0,2-0,5 g/l 3'-Syalyllactose (3'-SL), vorzugsweise zwischen 0,2-0,35 g/l 3'-SL, besonders bevorzugt zwischen 0,2-0,3 g/L 3'-SL;
b. 1 bis 3 g/l 3-Fucosyllactose (3-FL), vorzugsweise 1 bis 2,5 g/l 3-FL, besonders bevorzugt 1,2 bis 2 g/l 3-FL; und
c. Difucosyllactose (DFL),
wobei 3'-SL und DFL in einem Gewichtsverhältnis zwischen 1:1,1 und 1:2 vorliegen.

8. Altersspezifische Säuglingsnahrung nach Anspruch 7, die 0,2 bis 1 g/l DFL, vorzugsweise 0,3 bis 0,8 g/l DFL, besonders bevorzugt 0,35 bis 0,6 g/l DFL umfasst.

9. Altersspezifische Säuglingsnahrung nach einem der Ansprüche 7-8, wobei die Zusammensetzung ferner 2'-FL (2-Fucosyllactose) umfasst, wobei die Zusammensetzung vorzugsweise 0,1 bis 2,5 g/l 2-Fucosyllactose (2'-FL) umfasst, und/oder wobei die Zusammensetzung ferner 35 bis 68 g/l Laktose, vorzugsweise 40 bis 67 g/l Laktose, besonders bevorzugt 45 bis 66 g/l Laktose umfasst.

10. Altersspezifische Säuglingsnahrung nach einem der vorhergehenden Ansprüche, die mindestens ein weiteres Humanmilch-Oligosaccharid, das aus 6'-Sialyllactose (6'-SL), Lacto-N-Tetraose (LNT), Lacto-N-Neotetraose (LNnT), 3'-Galactosyllactose (3GL), Lacto-N-Fucopentaose (LNFP) und deren Isotopen, Lacto-N-Difucohexaose (LNDFH) und deren Isotopen, Lacto-N-Neodifucohexaose (LNnDFH) und deren Isotopen oder Mischungen davon ausgewählt ist, vorzugsweise mindestens ein Humanmilch-Oligosaccharid umfasst, das aus 6'-SL, LNT und 3GL oder Mischungen davon ausgewählt ist.

11. Altersspezifische Säuglingsnahrung nach einem der vorhergehenden Ansprüche, wobei die Zusammensetzung 0,05 bis 0,3 g/l 3GL, vorzugsweise 0,08 bis 0,25 g/l 3GL, besonders bevorzugt 0,1 bis 0,2 g/l 3GL umfasst.

12. Altersspezifische Säuglingsnahrung nach einem der vorhergehenden Ansprüche, wobei die Zusammensetzung 1 bis 10 g/l Gesamt-Humanmilch-Oligosaccharide (HMO) umfasst.

13. Säuglingsnahrung nach einem der vorhergehenden Ansprüche, die ferner Fructo-Oligosaccharide mit einem durchschnittlichen Polymerisationsgrad über 20 und/oder Galacto-Oligosaccharide mit einem durchschnittlichen Polymerisationsgrad im Bereich von 3 bis 7, vorzugsweise in einem Gewichtsverhältnis von Fructo-Oligosacchariden zu Galacto-Oligosacchariden im Bereich von 10 : 1 bis 1 : 100 umfasst.

14. Verfahren zum Bereitstellen einer laktationsstadiumspezifischen Ernährung für einen Säugling unter Verwendung der altersspezifischen Säuglingsnahrung nach einem der Ansprüche 1-13, wobei das Verfahren vorzugsweise mindestens einen Schritt umfasst, der aus Folgendem ausgewählt ist:
- Versorgen eines Säuglings im Alter von 0-4 Monaten mit einer Säuglingsnahrung nach den Ansprüchen 1-3 und 10-13;
- Versorgen eines Säuglings im Alter von 4-8 Monaten mit einer Säuglingsnahrung nach den Ansprüchen 4-6 und 10-13;
- Versorgen eines Säuglings im Alter von 8-36 Monaten mit einer Säuglingsnahrung nach den Ansprüchen 7-13.

## Revendications

1. Formule infantile spécifique à l'âge pour nourrissons de 0 à 4 mois, comprenant :
a) 0,05 à 0,30 g/l de 3'-sialyllactose (3'-SL), de préférence entre 0,08 et 0,25 g/l de 3'-SL, plus préférablement entre 0,10 et 0,20 g/l de 3'-SL, encore plus préférablement 0,10 à 0,18 g/l de 3'-SL ;
b) 0,3 à 1 g/l de 3-fucosyllactose (3-FL), de préférence 0,4 à 0,9 g/l de 3-FL, plus préférablement 0,5 à 0,8 g/l de 3-FL ; et
c) du difucosyllactose (DFL),
où le 3'-SL et le DFL sont présents dans un rapport pondéral compris entre 1:1,1 et 1:2.

2. Formule infantile spécifique à l'âge selon la revendication 1, comprenant 0,08 à 0,40 g/l de DFL, de préférence 0,10 à 0,35 g/l de DFL, plus préférablement 0,15 à 0,30 g/l de DFL.

3. Formule infantile spécifique à l'âge selon la revendication 1 ou 2, où la composition comprend en outre du 2'-FL (2-fucosyllactose), la composition comprenant de préférence 1,0 à 4 g/l de 2'-FL, et/ou la composition comprend en outre 35 à 68 g/l de lactose, de préférence 40 à 67 g/l de lactose, plus préférablement 45 à 66 g/l de lactose.

4. Formule infantile spécifique à l'âge pour nourrissons de 4 à 8 mois, comprenant :
a) 0,05 à 0,30 g/l de 3'-sialyllactose (3'-SL), de préférence entre 0,08 et 0,25 g/l de 3'-SL, plus préférablement entre 0,10 et 0,20 g/l de 3'-SL, encore plus préférablement 0,10 à 0,18 g/l de 3'-SL ;
b) 1 à 3 g/l de 3-fucosyllactose (3-FL), de préférence 1 à 2,5 g/l de 3-FL, plus préférablement 1,2 à 2 g/l de 3-FL ; et
c) du difucosyllactose (DFL),
où le 3'-SL et le DFL sont présents dans un rapport pondéral compris entre 1:1,1 et 1:2.

5. Formule infantile spécifique à l'âge selon la revendication 4, comprenant 0,10 à 0,40 g/l de DFL, de préférence 0,15 à 0,35 g/l de DFL, plus préférablement 0,2 à 0,3 g/l de DFL.

6. Formule infantile spécifique à l'âge selon la revendication 4 ou 5, où la composition comprend en outre du 2'-FL (2-fucosyllactose), la composition comprenant de préférence 0,25 à 3 g/l de 2'-FL, et/ou la composition comprend en outre 68 à 100 g/l de lactose, de préférence 70 à 90 g/l de lactose, plus préférablement 70 à 55 g/l de lactose.

7. Formule infantile spécifique à l'âge pour nourrissons de 8 à 36 mois, comprenant :
a) 0,2 à 0,5 g/l de 3'-syalyllactose (3'-SL), de préférence entre 0,2 et 0,35 g/l de 3'-SL, plus préférablement entre 0,2 et 0,3 g/l de 3'-SL ;
b) 1 à 3 g/l de 3-fucosyllactose (3-FL), de préférence 1 à 2,5 g/l de 3-FL, plus préférablement 1,2 à 2 g/l de 3-FL ; et
c) du difucosyllactose (DFL),
où le 3'-SL et le DFL sont présents dans un rapport pondéral compris entre 1:1,1 et 1:2.

8. Formule infantile spécifique à l'âge selon la revendication 7, comprenant 0,2 à 1 g/l de DFL, de préférence 0,3 à 0,8 g/l de DFL, plus préférablement 0,35 à 0,6 g/l de DFL.

9. Formule infantile spécifique à l'âge selon l'une quelconque des revendications 7 et 8, où la composition comprend en outre du 2'-FL (2-fucosyllactose), la composition comprenant de préférence 0,1 à 2,5 g/l de 2-fucosyllactose (2'-FL),
et/ou la composition comprend en outre de 35 à 68 g/l de lactose, de préférence 40 à 67 g/l de lactose, plus préférablement 45 à 66 g/l de lactose.

10. Formule infantile spécifique à l'âge selon l'une quelconque des revendications précédentes, comprenant au moins un oligosaccharide du lait maternel supplémentaire choisi parmi le 6'-sialyllactose (6'-SL), le lacto-N-tétrose (LNT), le lacto-N-néotétraose (LNnT), le 3'-galactosyllactose (3GL), le lacto-N-fucopentaose (LNFP) et les isotopes de celui-ci, le lacto-N-difucohexaose (LNDFH) et les isotopes de celui-ci, le lacto-N-néodifucohexaose (LNnDFH) et les isotopes de celui-ci, ou les mélanges de ceux-ci, de préférence au moins un oligosaccharide du lait maternel choisi parmi le 6'-SL, le LNT et le 3GL, ou les mélanges de ceux-ci.

11. Formule infantile spécifique à l'âge selon l'une quelconque des revendications précédentes, la composition comprenant 0,05 à 0,3 g/l de 3GL, de préférence 0,08 à 0,25 g/l de 3GL, et plus préférablement 0,1 à 0,2 g/l de 3GL.

12. Formule infantile spécifique à l'âge selon l'une quelconque des revendications précédentes, la composition comprenant 1 à 10 g/l d'oligosaccharides du lait maternel (HMO) totaux.

13. Formule infantile selon l'une quelconque des revendications précédentes, comprenant en outre des fructo-oligosaccharides avec un degré moyen de polymérisation supérieur à 20 et/ou des galacto-oligosaccharides avec un degré moyen de polymérisation compris entre 3 et 7, de préférence dans un rapport pondéral des fructo-oligosaccharides aux galacto-oligosaccharides compris entre 10:1 et 1:100.

14. Procédé pour fournir une nutrition spécifique au stade de la lactation à un nourrisson, en utilisant les formules infantiles spécifiques à l'âge telles que définies dans l'une quelconque des revendications 1 à 13, où le procédé comprend de préférence au moins une étape choisie parmi :
- fournir à un nourrisson âgé de 0 à 4 mois une formule infantile selon les revendications 1 à 3 et 10 à 13 ;
- fournir à un nourrisson âgé de 4 à 8 mois une formule infantile selon les revendications 4 à 6 et 10 à 13 ;
- fournir à un nourrisson âgé de 8 à 36 mois une formule infantile selon les revendications 7 à 13.
